# FASCICULE DE BREVET EUROPEEN

(11) **EP 4 393 050 B1**
(45) Date de publication et mention de la délivrance du brevet: **09.04.2025**
(21) Numéro de dépôt: 22758503.1
(22) Date de dépôt: 29.07.2022
(51) Int. Cl.: H02K 15/06

(54) **PROCÉDÉ D'INSERTION ET ENSEMBLE DE TRANSFERT D'ÉPINGLES CONDUCTRICES POUR UNE MACHINE ÉLECTRIQUE TOURNANTE**
VERFAHREN ZUM EINSETZEN UND ANORDNUNG ZUR ÜBERTRAGUNG VON LEITFÄHIGEN STIFTEN FÜR EINE ELEKTRISCHE DREHMASCHINE
METHOD FOR INSERTING AND ASSEMBLY FOR TRANSFERRING CONDUCTIVE PINS FOR A ROTARY ELECTRIC MACHINE

(30) Priorité: 24.08.2021 FR 2108849
(43) Date de publication de la demande: 03.07.2024
(73) Titulaire: Valeo Electrification, 95800 Cergy (FR)
(72) Inventeur: DE CLERCQ, Stéphane, 62630 Etaples-sur-Mer (FR); DUQUESNE, Jean, 62630 Etaples-sur-Mer (FR); TELES DE MENEZES, Humberto, 62630 Etaples-sur-Mer (FR); DARRAS, Ludovic, 62630 Etaples-sur-Mer (FR); GRESSIER, Samuel, 62630 Etaples-sur-Mer (FR); ACHIBANE, Hassna, 62630 Etaples-sur-Mer (FR); RAMET, Vincent, 62630 Etaples-sur-Mer (FR)
(74) Mandataire: Valeo Powertrain Systems
(86) Numéro de dépôt international: PCT/EP2022/071444
(87) Numéro de publication internationale: WO 2023/025522

(56) Documents cités:
- EP-A1- 3 664 264
- US-B2- 7 243 414

## Description

L'invention concerne notamment un procédé d'insertion d'épingles conductrices depuis un dispositif de transfert vers un corps de pièce bobinée de machine électrique tournante et un ensemble de transfert d'épingles conductrices permettant de mettre en œuvre ledit procédé.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique du véhicule tel qu'un véhicule automobile, ou lui fournir une assistance de couple.

Une pièce bobinée de machine électrique tournante est par exemple un stator comprenant un corps de pièce bobinée présentant une culasse formant une pièce de révolution autour d'un axe passant par le centre du stator. Le corps comporte des dents s'étendant radialement à partir de la culasse vers le centre du stator et autour desquelles est disposé un bobinage électrique. Plus particulièrement, les dents délimitent entre elles des encoches dans lesquelles passent des éléments conducteurs participant à former le bobinage du stator. Le bobinage est ici formé d'une pluralité d'épingles conductrices logées partiellement dans les encoches du corps et raccordées électriquement deux à deux via leurs extrémités pour former un chemin électrique continu. La plupart des épingles conductrices comprennent deux segments conducteurs sensiblement parallèles entre eux et reliés par une jonction coudée de manière à former un « U » décalé. Les segments conducteurs sont insérés respectivement, au niveau d'une première face d'extrémité axiale du stator, dans deux encoches distinctes de sorte que les jonctions coudées soient saillantes au niveau de la première face d'extrémité axiale du stator.

Cette forme des épingles en « U » décalé est classiquement obtenue par une première étape de pliage permettant d'obtenir une forme en « U » plat dans laquelle les deux segments conducteurs s'étendent dans un même plan, puis par une deuxième étape de vrillage dans laquelle les deux segments conducteurs sont décalés dans une direction circonférentielle l'un par rapport à l'autre. Cette étape de vrillage est classiquement faite lors d'une étape de vrillage global dans laquelle toutes les épingles conductrices sont vrillées en même temps pour obtenir le décalage de leurs segments conducteurs respectifs. Cette étape de vrillage global permet que positionner les épingles sur un cercle de diamètre correspondant à leur position finale dans le corps de pièce bobinée. Un outil tel qu'une pince permet ensuite de récupérer toutes les épingles mises dans l'outil de vrillage et de les insérer dans le corps de pièce bobinée. L'étape de vrillage global facilite l'opération de transfert des épingles depuis l'outils de vrillage vers le corps de pièce bobinée car une fois vrillées les épingles sont déjà disposées dans leur position finale, correspondant au bon diamètre du stator, permettant leur insertion directe dans ledit corps. Cependant, cette étape de vrillage global ne permet pas un vrillage précis des épingles et peut engendrer des cassures dans l'émail recouvrant le cuivre formant les épingles conductrices ce qui peut provoquer des courts-circuits.

L'étape de vrillage peut alternativement être faite par une étape de vrillage unitaire dans laquelle chaque épingle est vrillée individuellement ce qui permet de mieux contrôler les dimensions finales des épingles et d'éviter les cassures de l'émail. De par leur forme en « U » et le décalage entre les segments conducteurs, il n'est pas possible, lors d'un procédé automatique, de positionner les épingles directement dans leur position finale pour leur insertion dans le corps de pièce bobinée. Par exemple, une méthode connue consiste à placer les épingles dans un outil présentant un diamètre largement supérieur au diamètre du corps de pièce bobinée pour ensuite avancer les épingles dans une direction radiale vers l'axe de l'outil jusqu'à ce que les épingles soient placées dans leur position finale pour l'insertion dans le corps de pièce bobinée. Une pince, telle que celles utilisée après un procédé de vrillage global, peut ensuite être utilisée pour transférer les épingles de cet outil vers le corps de pièce bobinée.

Ces différentes étapes de mise en place des épingles dans un diamètre correspondant au diamètre de leur position finale dans le corps de pièce bobinée ainsi que le transfert des épingles de l'outil de mise en place dans ledit corps sont généralement faites au moyen de plusieurs outillages ce qui complexifie le procédé de réalisation du bobinage de la pièce bobinée, rallonge le temps de fabrication sur les lignes d'assemblage de par le transfert des épingles entre les différents outils et peut augmenter le risque de défaillance d'un des outillages. Ces deux inconvénients augmentent le coût de fabrication d'une pièce bobinée comprenant un bobinage de type à épingles conductrices.

La demande de brevet EP 3 664 264 A1 décrit un procédé d'insertion d'épingles conductrices depuis un dispositif de transfert vers un corps de pièce bobinée, connus de l'art antérieur.

La présente invention vise à permettre d'éviter les inconvénients de l'art antérieur. A cet effet, la présente invention a pour objet un procédé d'insertion d'épingles conductrices depuis un dispositif de transfert vers un corps de pièce bobinée, chaque épingle conductrice étant formée d'au moins un segment conducteur et étant destinée à être connectée électriquement à au moins une autre épingle conductrice par l'intermédiaire de leur extrémité libre pour former un bobinage électrique d'une pièce bobinée d'une machine électrique tournante s'étendant autour d'un premier axe. Selon l'invention, le dispositif de transfert comprend un corps de broche s'étendant autour d'un second axe et une pluralité de lamelles de guidage s'étendant radialement à partir du corps de broche, des espaces latéraux destinés à loger au moins un segment conducteur étant définis entre deux lamelles de guidage adjacentes. Selon l'invention, la pièce bobinée comprend un corps de pièce bobiné de forme cylindrique et une pluralité de dents s'étendant à partir dudit corps de pièce bobiné de sorte à définir, entre deux dents adjacentes, des encoches destinées à loger au moins un segment conducteur. Selon l'invention, le procédé d'insertion comprend : une étape de préparation dans laquelle les épingles conductrices sont agencées au moins partiellement dans les espaces latéraux du corps de broche du dispositif de transfert ; une étape de positionnement du corps de broche du dispositif de transfert par rapport au corps de pièce bobiné axialement l'un au-dessus de l'autre ; une étape de guidage dans laquelle un dispositif de guidage est agencé pour guider, dans une direction circonférentielle et/ou radiale, les segments conducteurs desdites épingles conductrices ; l'étape de guidage comportant une phase d'insertion d'au moins une portion du dispositif de guidage entre des segments conducteurs dans une position d'insertion et une phase de lissage dans laquelle le dispositif de guidage et/ou le dispositif de transfert est déplacé axialement entre la position d'insertion et une position de guidage dans laquelle ladite portion du dispositif de guidage est agencée de manière plus proche des extrémités desdits segments conducteurs par rapport à la position d'insertion et une étape de transfert comprenant une phase de transfert dans laquelle les segments conducteurs sont insérés, dans une direction axiale, dans les encoches correspondantes, et une phase de déplacement d'au moins une lamelle de guidage entre une position d'engagement dans laquelle au moins une portion de ladite lamelle s'étend entre deux segments conducteurs et une position de dégagement dans laquelle ladite au moins une portion de la lamelle s'étend à distance desdits deux segments conducteurs.

Grâce à la présente invention, le dispositif de transfert permet à la fois d'agencer les épingles conductrices suivant leur disposition finale, c'est-à-dire que les épingles sont agencées suivant le diamètre des encoches du corps de pièce bobinée, et de réaliser l'insertion desdites épingles dans le corps de pièce bobinée. Ainsi un seul dispositif est utilisé et l'emploi d'une pince de transfert n'est pas nécessaire. Le fait de séparer l'étape de guidage en deux étapes permet de simplifier ladite étape en permettant l'insertion du dispositif de guidage dans un positionnement favorable où les épingles sont mieux espacées et/ou mieux maintenues en position. Cela permet également grâce à la phase de lissage de rapprocher le dispositif de guidage des extrémités des épingles pour optimiser leur guidage et faciliter leur insertion dans le corps de pièce bobinée.

Le procédé d'assemblage du bobinage comprenant des épingles conductrices est simplifié et raccourci, les risques de mauvais positionnement des épingles sont diminués et le coût global du procédé d'insertion des épingles dans le corps de pièce bobinée est diminué.

En outre, l'étape de guidage permet d'améliorer le guidage des épingles conductrices vers les encoches afin d'éviter que les épingles conductrices ne viennent en contact avec le corps de pièce bobinée.

Selon une réalisation, lors de l'étape de préparation, les épingles conductrices sont agencées de manière séquentielle dans les espaces latéraux. On entend par « de manière séquentielle » le fait que les épingles sont agencées individuellement ou par groupe de plusieurs épingles dans les espaces latéraux et non toute en une seule étape. Autrement dit, l'étape de préparation comporte plusieurs phases d'insertion qui se succèdent.

Selon une réalisation, lors de l'étape de positionnement, le corps de broche et le corps de pièce bobinée sont agencées de sorte que chaque espace latéral soit au moins partiellement aligné axialement avec une encoche correspondante du corps de pièce bobinée.

Selon une réalisation, le dispositif de guidage comporte des tiges insérées radialement entre les segments conducteurs, l'étape de guidage étant réalisée par déplacement desdites tiges et/ou du corps de broche dans une direction circonférentielle et/ou radiale. Cela permet d'améliorer de manière simple le guidage des épingles.

Selon une réalisation, les tiges du dispositif de guidage sont insérées radialement entre les segments conducteurs et présentent un mouvement de translation axial lors de la phase de lissage pour accompagner l'insertion des segments conducteurs dans les encoches associées. Le mouvement de translation axial des tiges est notamment stoppé lorsque les tiges rentrent en contact avec le corps de pièce bobinée. Cela permet d'optimiser le guidage et l'accompagnement des épingles conductrices.

Alternativement, les tiges du dispositif de guidage peuvent être positionnée sur les dents du corps de pièce bobinée lors de la phase d'insertion. Les tiges ne présentent alors pas de mouvement axial, leur fabrication est simplifiée.

Selon une réalisation, les tiges du dispositif de guidage présentent un mouvement de translation radial. Ce mouvement permet d'insérer les tiges entre les segments conducteurs pour permettre leur guidage ou de les retirer une fois le guidage terminé.

Selon une réalisation, les segments conducteurs sont insérés axialement dans les encoches, lors de l'étape de transfert, jusqu'à leur position axiale respective finale dans le corps de pièce bobinée. Cette position axiale finale est par exemple obtenue lorsqu'une partie de chaque épingle conductrice insérée est en butée axiale avec le corps de pièce bobinée. Par exemple, le contact entre une portion de chaque épingle et ledit corps peut être direct ou indirect et notamment via un élément de protection intermédiaire agencé axialement à l'extrémité de chaque dent dudit corps ou un isolant électrique.

Selon une réalisation, le corps de pièce bobinée présente une forme annulaire s'étendant autour du premier axe et le corps de broche présente une forme cylindrique s'étendant autour du second axe complémentaire de ladite forme annulaire de sorte à ce que lors de l'étape de transfert, le corps de broche soit inséré dans le corps de pièce bobinée. L'insertion du corps de broche dans le corps de pièce bobinée permet une meilleure stabilité des épingles conductrices lors de l'étape de transfert.

Selon une réalisation, les épingles sont agencées dans le corps de broche suivant un diamètre sensiblement égal au diamètre dans lequel lesdites épingles seront agencées dans le corps de pièce bobinée. Autrement dit, seul des petits mouvements radiaux des épingles sont possibles, notamment lors des étapes de guidage et/ou de transfert par exemple pour rattraper les jeux d'assemblage des épingles.

Selon une réalisation, le corps de broche comprend, en outre, au moins une protubérance s'insérant au moins partiellement dans les encoches de sorte à aligner circonférentiellement le corps de pièce bobinée par rapport au corps de broche.

Selon une réalisation, l'étape de transfert comporte, en outre, une phase de retrait d'un support de maintien radial agencé pour maintenir dans une direction radiale les segments conducteurs des épingles conductrices dans les espaces latéraux du corps de broche. Cette étape de retrait du support de maintien lors de l'étape de transfert permet d'éviter que le support de maintien ne gêne l'insertion des segments conducteurs dans les encoches tout en maintenant les épingles radialement le plus longtemps possible pour éviter un mouvement de décalage qui viendrait perturber l'étape de transfert.

Selon une réalisation, la phase de retrait présente une première phase dans laquelle le support de maintien radial est décalé axialement dans une direction opposée à la direction de transfert des épingles conductrice puis une seconde phase dans laquelle le support de maintien est éloigné, notamment radialement, des épingles conductrices. Ces deux phases de l'étape de retrait permettent d'optimiser le maintien radial des épingles conductrices lors de leur transfert vers le corps de pièce bobinée.

Selon une réalisation, l'étape de transfert comporte, en outre, une phase de maintien, par un support de maintien axial, dans une direction axiale des épingles conductrices pour éviter un mouvement axial desdites épingles par rapport au corps de broche. Cette étape de maintien permet d'optimiser le transfert des épingles conductrices dans le corps de pièce bobinée tout en permettant un transfert homogène de toutes les épingles en même temps. Cela permet d'optimiser le temps de réalisation de ladite étape.

Selon une réalisation, l'étape de transfert comporte, en outre, une phase de blocage, par un dispositif de blocage, dans une direction radiale des épingles conductrices pour éviter un mouvement radial desdites épingles par rapport au corps de pièce bobinée. Par exemple, la phase de blocage est réalisée de sorte à empêcher un mouvement radial vers l'extérieur par rapport à l'axe du corps de pièce bobinée.

On entend par direction radiale vers l'extérieur par rapport à un axe, une direction radiale de sens opposé audit axe.

Selon une réalisation, l'étape de transfert peut comporter, en outre, une phase de poussée, par un dispositif de poussée, dans une direction radiale des épingles conductrices. Cela permet d'éviter que les épingles conductrices ne viennent en contact avec le corps de pièce bobinée et ainsi de mieux garantir leur insertion dans ledit corps. Par exemple, la phase de poussée est réalisée dans une direction radiale vers l'extérieur par rapport à l'axe du corps de pièce bobinée, de sorte à empêcher un contact entre lesdites épingles et l'extrémité interne dudit corps, notamment les pieds de dent.

Selon une réalisation, les lamelles de guidage sont rétractables de sorte à pouvoir être logées, respectivement, dans des rainures correspondantes réalisées dans le corps de broche, lors de la phase de déplacement. Cette solution de rétractation des lamelles de guidage est une solution simple et peu encombrante pour dégager les segments conducteurs des épingles lors de l'étape de transfert.

Alternativement, les lamelles de guidage peuvent être rapportées au corps de broche de sorte à pouvoir être détachées du corps de broche, notamment lors de l'étape de transfert. Dans une autre alternative, les lamelles de guidage peuvent présenter un mouvement axial dans une direction opposée à la direction de transfert des épingles conductrices.

Selon une réalisation, lors de l'étape de transfert, le corps de broche et/ou le corps de pièce bobinée présentent un mouvement circonférentiel accompagnant la phase de transfert. Cela permet d'insérer, dans le corps de pièce bobinée, des épingles conductrices dont les segments conducteurs ne sont pas rectilignes ce qui est par exemple le cas dans le cas d'une pièce bobinée dite vrillée.

La présente invention a également pour objet un ensemble de transfert d'épingles conductrices, chaque épingle conductrice étant formée d'au moins un segment conducteur et étant destinée à être connectée électriquement à au moins une autre épingle conductrice par l'intermédiaire de leur extrémité libre pour former un bobinage électrique d'une pièce bobinée d'une machine électrique tournante s'étendant autour du premier axe. Selon l'invention, l'ensemble de transfert est agencé pour participer à la mise en œuvre du procédé d'insertion décrit précédemment et comprend :
- un dispositif de transfert comprenant un corps de broche s'étendant autour du second axe et une pluralité de lamelles de guidage s'étendant radialement à partir du corps de broche, des espaces latéraux destinés à loger au moins un segment conducteur étant définis entre deux lamelles de guidage adjacentes au moins une lamelle de guidage étant mobile entre une position d'engagement dans laquelle au moins une portion de ladite lamelle s'étend entre deux segments conducteurs et une position de dégagement dans laquelle ladite au moins une portion de la lamelle s'étend à distance desdits deux segments conducteurs ,
- une base agencée pour maintenir le corps de pièce bobinée,
- un dispositif de guidage agencé pour guider, dans une direction circonférentielle et/ou radiale, les segments conducteurs desdites épingles conductrices.

Selon une réalisation, le dispositif de guidage présente des tiges s'étendant circonférentiellement entre deux segments conducteurs.

Selon une réalisation, les tiges présentent des mouvements de translation dans des directions axiales et/ou radiales et/ou circonférentielles.

Selon une réalisation, le dispositif de guidage et la base forment un même outillage de sorte que le corps de pièce bobinée soit maintenu par le dispositif de guidage. Alternativement, le dispositif de guidage et la base forment deux outillages distincts.

Selon une réalisation, l'ensemble de transfert comporte, en outre, un support de maintien axial agencé pour maintenir, dans une direction axiale, les épingles conductrices pour éviter un mouvement axial desdites épingles par rapport au corps de broche ; et/ou un support de maintien radial agencé pour maintenir, dans une direction radiale, les segments conducteurs des épingles conductrices dans les espaces latéraux du corps de broche ; et/ou un dispositif de blocage agencé pour bloquer dans une direction radiale, les épingles conductrices, pour éviter un mouvement radial desdites épingles par rapport au corps de pièce bobinée.

Par exemple, le support de maintien axial forme une butée axiale pour éviter un mouvement axial des épingles conductrice opposé à une direction d'insertion desdites épingles dans le corps de pièce bobinée.

Par exemple, le support de maintien est agencé pour bloquer un mouvement radial, vers l'extérieur par rapport à l'axe du corps de broche, des segments conducteurs.

Par exemple, le dispositif de blocage est agencé pour bloquer un mouvement radial vers l'extérieur par rapport à l'axe du corps de pièce bobinée des segments conducteurs.

Selon une réalisation, l'ensemble comporte, en outre, un dispositif de poussée agencé pour maintenir les épingles conductrices dans une direction radiale et/ou pour exercer une force de poussée desdites épingles dans une direction radiale vers l'extérieur par rapport à l'axe du corps de pièce bobinée. Cela permet d'éviter que les épingles conductrices ne viennent en contact avec le corps de pièce bobinée, notamment avec l'extrémité interne dudit corps en particulier les pieds de dent, et ainsi de mieux garantir leur insertion dans ledit corps.

Selon une réalisation, l'ensemble comporte un dispositif d'immobilisation d'au moins une épingle conductrice d'alimentation ou de connexion dans le corps de broche, ladite épingle conductrice d'alimentation ou de connexion présentant une hauteur, dans une direction axiale, différente d'une hauteur, dans une direction axiale, d'une épingle conductrice standard. Ce dispositif d'immobilisation permet d'effectuer le procédé d'insertion décrit précédemment en une seule fois même lorsque le bobinage électrique à insérer présente différents types d'épingles conductrices. Cela permet de simplifier le procédé d'insertion et de le standardiser quel que soit le type d'épingles conductrices utilisé.

Selon une réalisation, au moins une épingle conductrice présente deux segments conducteurs connectés entre eux par une jonction coudée, lesdits segments conducteurs étant respectivement agencés à des distances différentes de l'axe et selon un angulaire différent. Autrement dit, les segments conducteurs d'une même épingle ne sont pas alignés radialement l'un avec l'autre. Les segments conducteurs sont donc agencés dans des espaces latéraux différents du dispositif de transfert.

La présente invention pourra être mieux comprise à la lecture de la description détaillée qui va suivre, d'exemples de mise en œuvre non limitatifs de l'invention et de l'examen des dessins annexés.
La [Fig. 1] représente, schématiquement et partiellement, une vue en coupe d'une machine électrique tournante selon un exemple de mise en œuvre de l'invention.
La [Fig. 2] représente schématiquement une vue en perspective du stator de la figure 1.
La [Fig. 3] représente schématiquement une vue en perspective d'un exemple d'épingle conductrice du stator de la figure 2.
La [Fig. 4] représente schématiquement une vue en coupe suivant un plan radial d'une partie du stator de la figure 2.
La [Fig. 5] représente schématiquement une vue en perspective d'un exemple de dispositif de transfert portant des épingles conductrices.
La [Fig. 6] représente schématiquement une vue en perspective du corps de broche du dispositif de transfert de la figure 5.
La [Fig. 7] représente schématiquement une vue en perspective support de maintien axial du dispositif de transfert de la figure 5.
La [Fig. 8] représente schématiquement une vue en perspective d'un exemple de base munie du dispositif de guidage dans laquelle est insérée le corps de pièce bobinée de la figure 2 sans les épingles conductrices.
La [Fig. 9] représente une vue agrandie d'une partie de la figure 8.
La [Fig. 10] représente schématiquement et partiellement le dispositif de transfert de la figure 5 agencé dans la base de la figure 8 pour réaliser une étape du procédé d'insertion.
La [Fig. 11] représente un logigramme d'un exemple de procédé d'insertion.

Les éléments identiques, similaires ou analogues conservent les mêmes références d'une figure à l'autre. On notera également que les différentes figures ne sont pas nécessairement à la même échelle.

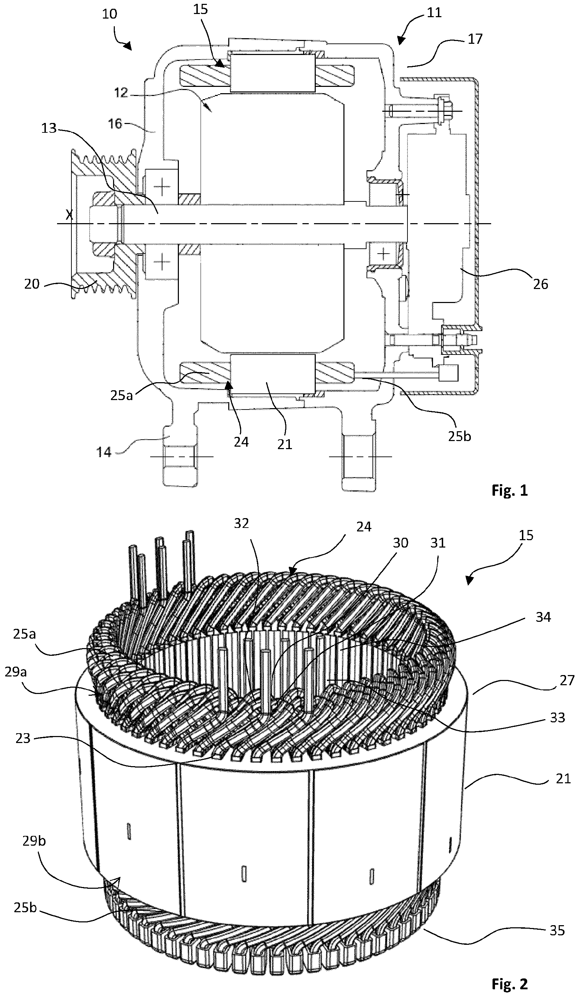

La figure 1 représente un exemple de machine électrique tournante 10 compacte et polyphasée, notamment pour véhicule tel qu'un véhicule automobile ou un drone. Cette machine 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique.

Dans cet exemple, la machine 10 comporte un boitier 11, notamment formé d'un premier flasque 16 et d'un second flasque 17, fixé au véhicule par des moyens de fixation 14. A l'intérieur de ce boitier 11, elle comporte, en outre, un arbre 13, un rotor 12 solidaire en rotation de l'arbre 13 et un stator 15 entourant le rotor 12. Le mouvement de rotation du rotor 12 se fait autour d'un axe X. Dans la suite de la description, la direction axiale correspond à l'axe X, traversant en son centre l'arbre 13, alors que les orientations radiales correspondent à des plans concourants, et notamment perpendiculaires, à l'axe X. Pour les directions radiales, la dénomination interne correspondant à un élément orienté vers l'axe, ou plus proche de l'axe par rapport à un second élément, la dénomination externe désignant un éloignement de l'axe. Un organe d'entraînement 20 tel qu'une poulie ou un pignon peut être fixé sur une extrémité avant de l'arbre 13. Cet organe permet de transmettre le mouvement de rotation à l'arbre ou à l'arbre de transmettre son mouvement de rotation.

Dans l'exemple de réalisation décrit dans la suite de la description, la pièce bobinée correspond au stator 15 de la machine électrique tournante. Cependant on ne sortira pas du cadre de l'invention en utilisant un rotor comme pièce bobinée.

Dans cet exemple de réalisation, le stator 15 comporte un corps de pièce bobinée 21 formé d'un paquet de tôles doté d'encoches 22, équipées d'isolant d'encoche 23 pour le montage d'un bobinage électrique 24. Le bobinage traverse les encoches du corps 21 et forment un chignon avant 25a et un chignon arrière 25b de part et d'autre du corps de pièce bobinée. Par ailleurs, le bobinage 24 est formé d'une ou plusieurs phases comportant au moins un conducteur électrique et étant reliées électriquement à un ensemble électronique 26. L'ensemble électronique 26 qui est ici monté sur le boitier 11, comporte au moins un module électronique de puissance permettant de piloter au moins une phase du bobinage 24. Le module de puissance forme un convertisseur de tension formant notamment un pont redresseur de tension pour transformer la tension alternative générée en une tension continue et inversement. Alternativement, l'ensemble électronique pourrait être déporté de la machine.

La figure 2 représente plus en détail le stator 15. Le corps de pièce bobinée 21 est formé d'une culasse 27 de forme annulaire autour de l'axe X et d'une pluralité de dents 28 s'étendant radialement en direction du centre du stator à partir de la culasse, et en particulier ici à partir d'une face latérale formant une paroi interne de la culasse 27. Les dents 28 sont réparties angulairement régulièrement sur le pourtour de la culasse, avec des espaces successifs ménagés entre deux dents adjacentes de manière à définir les encoches 22. Selon la direction axiale, les encoches 22 sont ouvertes sur une première face d'extrémité axiale 29a et une seconde face d'extrémité axiale 29b du corps de pièce bobinée 21. Autrement dit, les encoches traversent axialement de part en part le corps et débouchent sur les deux faces d'extrémité axiales opposées du stator. Par les termes « faces d'extrémité axiales », on entend des faces perpendiculaires ou sensiblement perpendiculaires à l'axe de révolution X du stator.

Le bobinage 24 est formé à partir d'une pluralité d'épingles conductrices 18, chacune présentant au moins un segment conducteur 19, reliées électriquement entre elles pour former des chemins électriques formant les phases du bobinage. Dans l'exemple de la figure 2, chaque phase comprend une pluralité d'épingles conductrices 18 dont une pluralité de premières épingles standards 31, une pluralité de deuxièmes épingles standards 30, une épingle de connexion 32 et deux épingles d'alimentation 33, 34. Alternativement, chaque phase peut être formée différemment, ainsi on ne sortira pas du cadre de l'invention en changeant la composition du type d'épingle conductrice formant une phase, par exemple en enlevant l'épingle de connexion ou en ayant un nombre différent de type d'épingles standards.

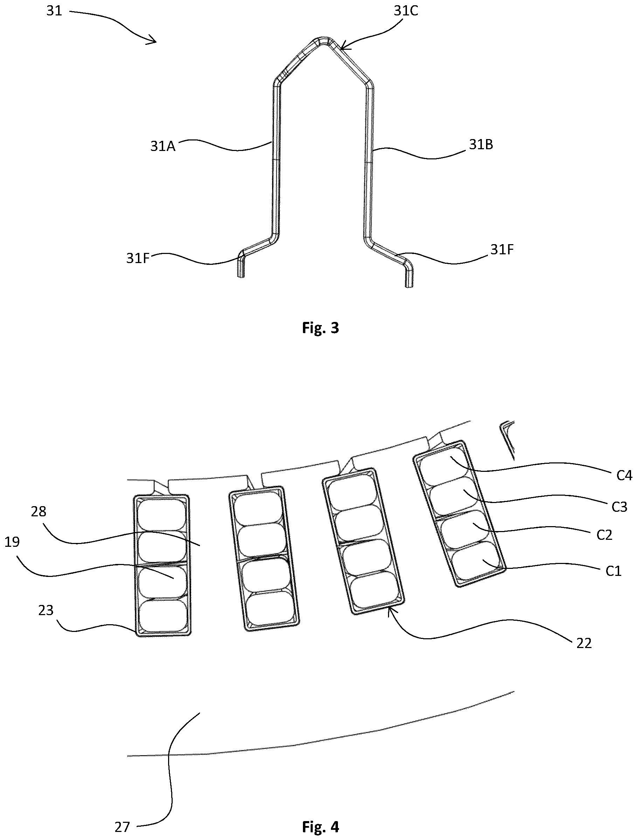

Comme illustré sur la figure 3, une épingle conductrice standard 30, 31 est formée de deux segments conducteurs 31A, 31B s'étendant axialement dans les encoches 22 et qui sont à cet effet sensiblement parallèle entre eux. Lesdits segments conducteurs sont connectés entre eux par l'intermédiaire d'une jonction coudée 31C qui est également conductrice de manière à former une continuité électrique. Les segments conducteurs 31A, 31B d'une même épingle 30, 31 sont disposés dans deux encoches distinctes l'une de l'autre. Les segments conducteurs sont connectés chacun à une autre épingle conductrice via leurs extrémités libres 31F respectives. Ces liaisons électriques entre les épingles conductrices sont par exemple faites par soudure. Les extrémités libres 31F et la jonction coudée 31C s'étendent axialement en dehors des encoches de sorte à former les chignons 25a, 25b. Les épingles d'alimentation 33, 34 sont chacune formées d'un unique segment conducteur s'étendant axialement dans les encoches 22. L'épingle de connexion 32 peut présenter une forme similaire aux épingles standards ou aux épingles d'alimentation. Au moins une épingle d'alimentation 33, 34 ou au moins une épingle de connexion 32 peut présenter une hauteur, dans une direction axiale, différente d'une hauteur d'une épingle standard 30, 31.

Comme visible sur la figure 4, les différents segments conducteurs 19 disposés dans une même encoche 22 sont superposés afin de former un empilement de N couches Ci, étant entendu que ces N couches sont présentes dans chacune des encoches de sorte que l'on forme sur le pourtour du stator des cercles annulaires sensiblement coaxiaux entre eux. Dans cet exemple de réalisation, ces couches sont au nombre de quatre et numérotées de C1 à C4, selon leur ordre d'empilement dans les encoches 22. La première couche C1 correspond à la couche externe, la deuxième couche C2 correspond à une couche centrale externe directement voisine de la première couche C1, la troisième couche C3 correspond à la couche centrale interne directement voisine de la deuxième couche C2 et la quatrième couche C4 correspond à la couche interne. La première couche C1 est ainsi occupée par le segment conducteur le plus proche de la culasse 27 et la couche C4 est ainsi occupée par le segment conducteur le plus proche de l'axe X. Bien entendu, l'invention ne se limite pas à ce seul mode de réalisation de sorte qu'un nombre supérieur ou inférieur de segments conducteurs peut être empilé dans chaque encoche par exemple 2, 6, 8 ou 10 conducteurs. Par exemple, une couche est formée par un unique segment conducteur. Ainsi, chaque encoche 22 comprend N segments conducteurs alignés radialement les uns par rapport aux autres sur une seule ligne et formant chacun une couche Ci. Dans l'exemple illustré, les segments conducteurs présentent chacun une section sensiblement rectangulaire facilitant leur empilement dans l'encoche.

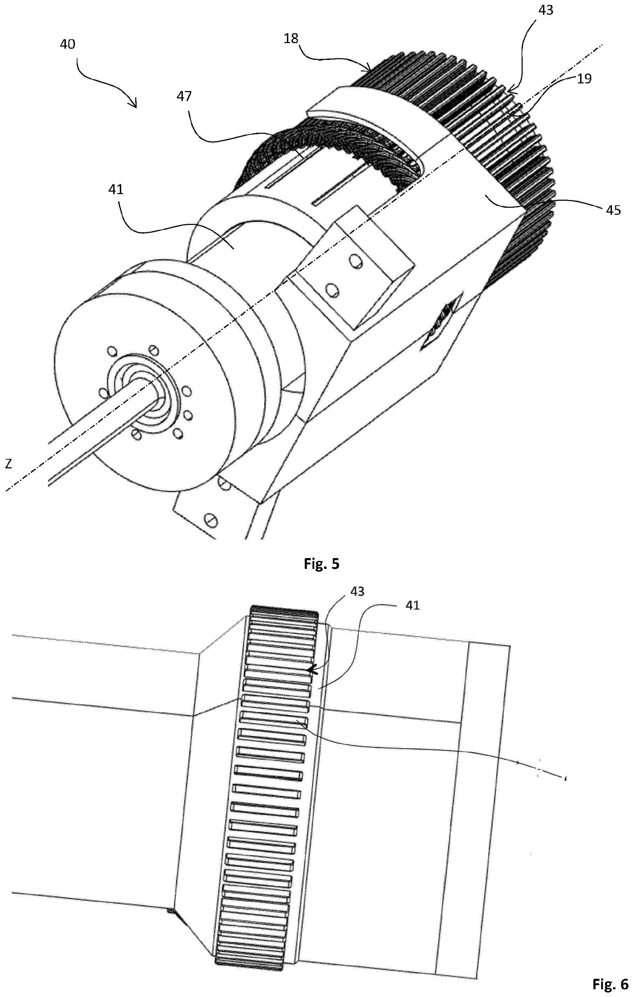

Il va maintenant être décrit en référence aux figures 5 à 11, un procédé d'insertion 100 des épingles conductrices 18 permettant d'insérer les épingles conductrices depuis un dispositif de transfert 40 vers les encoches 22 du corps de pièce bobinée 21. La figure 5 représente un exemple de dispositif de transfert 40 dans lequel sont agencées les épingles conductrices 18 avant leur transfert dans le corps de pièce bobinée 21. Le dispositif de transfert 40 comprend un corps de broche 41 s'étendant de manière globalement cylindrique autour d'un second axe Z et une pluralité de lamelles de guidage 42 s'étendant radialement à partir du corps de broche 41. Deux lamelles de guidage adjacentes définissent un espace latéral 43 dans lequel peut être logé au moins un segment conducteur 19 d'une épingle conductrice, et notamment plusieurs segments conducteurs en l'occurrence quatre dans cet exemple. La figure 6 représente le corps de broche 41, les lamelles de guidage 42 et les espaces latéraux 43 sans les épingles conductrices 18.

Lors de ce procédé d'insertion 100, les épingles conductrices 18 présentent une forme intermédiaire, c'est-à-dire qu'elles présentent une forme qui n'est pas la forme finale des épingles conductrices pour former le bobinage électrique 24. Lors de ce procédé d'insertion, chaque épingle 18 a subi une étape préalable de mise en forme dans laquelle une jonction coudée 18C est formée, notamment par une première phase de pliage puis une seconde phase de vrillage permettant de décaler circonférentiellement les segments conducteurs 19 d'une même épingle conductrice. La phase de vrillage est de préférence une phase de vrillage unitaire faite individuellement pour chaque épingle conductrice 18. Lors dudit procédé, les segments conducteurs 19 s'étendent axialement jusqu'à leur extrémité libre 19F.

Le procédé d'insertion 100 présente une première étape de préparation 101 dans laquelle les épingles conductrices 18 sont chargées dans le corps de broche 41 du dispositif de transfert 40. Cette étape de préparation 101 peut être réalisée de manière manuelle, un opérateur mettant manuellement en position les épingles conductrices une par une dans les espaces latéraux, ou de manière automatique. Des exemples de procédé décrivant en détail cette étape de préparation 101 lorsqu'elle est faite de manière automatique sont par exemples disponibles dans les demandes de brevet français déposées respectivement sous les numéros 2108842, 2108845 et 2108847. Chacune de ces demandes décrivant un procédé automatique de chargement des épingles conductrices 18 dans le dispositif de transfert 40. Le contenu de chacune de ces demandes est incorporé par référence à cette description. La particularité de chacune de ses méthodes est que les épingles conductrices 18 sont agencées de manière séquentielle dans les espaces latéraux 43, c'est-à-dire lors de plusieurs étapes d'insertion successives.

L'étape de préparation 101 peut être faite en totalité par l'une des méthodes manuelle ou automatique décrite ci-dessus ou par une combinaison de plusieurs desdites méthodes. Par exemples, les épingles standards 30, 31 peuvent être chargées au moyen d'un des procédés automatiques et les épingles de connexion 32 et/ou d'alimentation 33, 34 peuvent être chargées au moyen du procédé manuel. Alternativement, il est également possible de charger uniquement les épingles standards 30, 31 lors de l'étape de préparation 101, les épingles de connexion 32 et/ou d'alimentation 33, 34 pouvant être chargée, manuellement ou automatiquement, directement dans le corps de pièce bobinée 21 une fois les épingles standards 30, 31 insérées dans ledit corps 21.

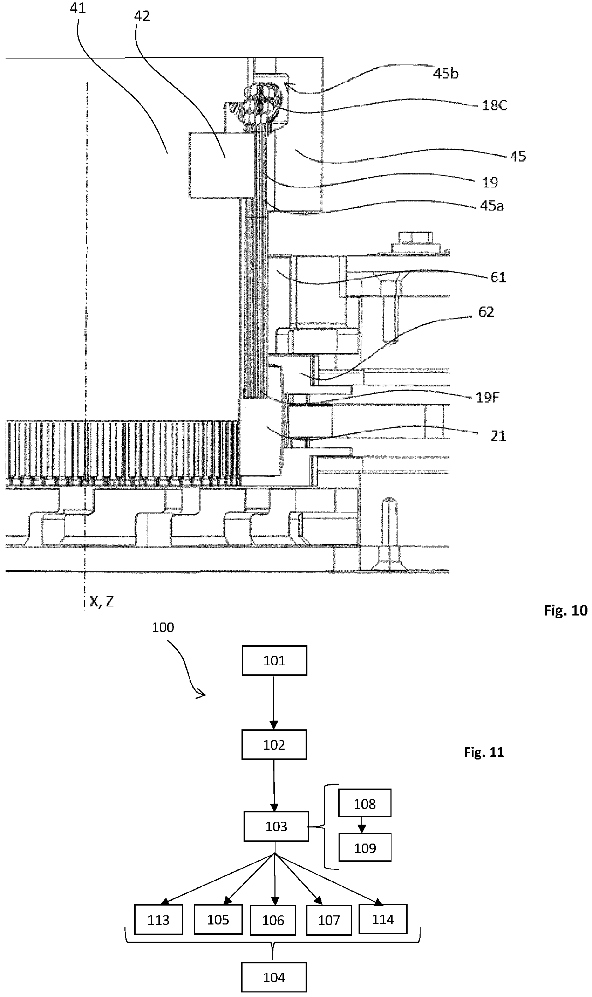

Après cette étape de préparation 101, les épingles conductrices 18 sont agencées dans le corps de broche 41 de sorte à ce que les segments conducteurs 19 soient logés au moins partiellement dans les espaces latéraux 43. Plus précisément dans cet exemple et comme visible sur la figure 10, les segments conducteurs 19 sont logés dans les espaces latéraux 43 de sorte à ce que chaque extrémité libre 19F dépasse axialement de l'espace latéral. Autrement dit, chaque lamelle de guidage 42 présente une hauteur dans une direction axiale inférieure à une hauteur axiale des segments conducteurs 19. Alternativement, chaque lamelle de guidage 42 peut présenter une hauteur égale ou supérieure à la hauteur axiale des segments conducteurs 19.

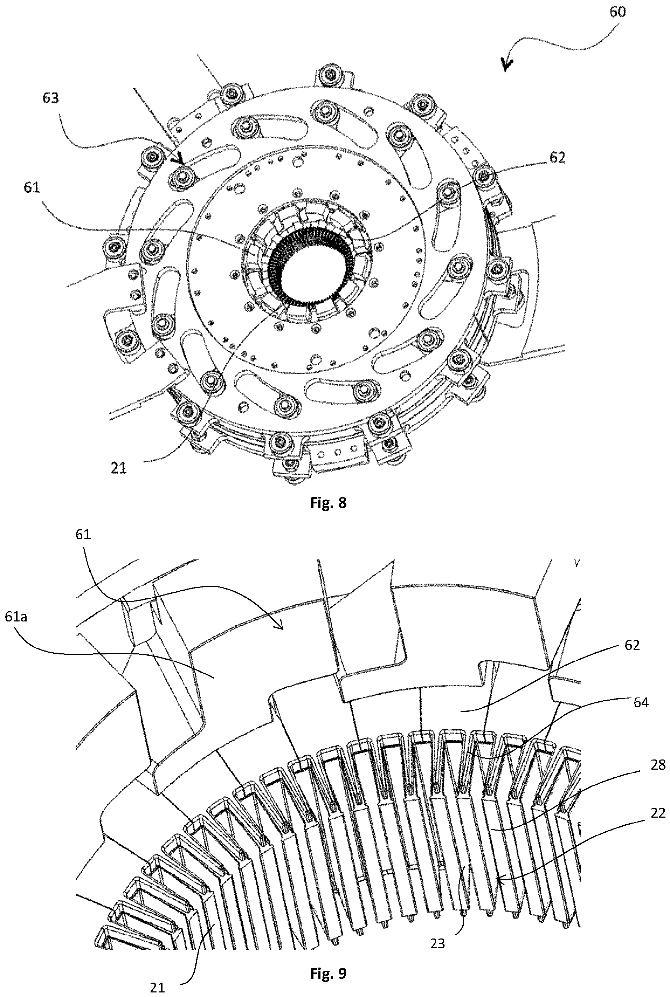

Un ensemble de transfert permettant de mettre en œuvre le procédé d'insertion 100 comprend le dispositif de transfert 40 et une base 60, illustrée sur la figure 8. La base 60 permet de maintenir, notamment dans toutes les directions, le corps de pièce bobinée 21 lors du procédé d'insertion 100.

Le procédé d'insertion 100 présente une deuxième étape de positionnement 102 du corps de broche 41 du dispositif de transfert 40 par rapport au corps de pièce bobiné 21 de sorte à ce que au moins une portion de chaque espace latéral 43 soit aligné axialement avec au moins une portion d'une encoche 22. Alternativement, un décalage angulaire peut être envisagé pour rattraper des jeux d'assemblage. Le corps de broche 41 est également positionné de sorte à ce que les extrémités libres 19F des segments conducteurs s'étendent en vis-à-vis des encoches 22. Lors de cet exemple d'étape de positionnement 102, le corps de broche et le corps de pièce bobinée sont positionnés de sorte à ce que leur axe respectif X, Z soient agencés de manière parallèle et, soient notamment confondus l'un avec l'autre.

Préalablement à ladite étape de positionnement 102, les isolants d'encoche 23 sont positionnées dans les encoches 22 respectives du corps 21.

Le procédé d'insertion 100 présente une troisième étape de guidage 103 dans laquelle un dispositif de guidage 62 guide les segments conducteurs 19 pour faciliter leur insertion dans les encoches. Le dispositif de guidage 62 présente ici une pluralité de tiges 64, chaque tige 64 peut présenter un mouvement de translation dans une direction radiale et/ou axiale et/ou circonférentielle entre une position de guidage dans laquelle la tige est agencée de manière alignée axialement avec une dent 28 associée et une position de repos dans laquelle la tige est en retrait radialement par rapport à ladite dent. Le mouvement de translation des tiges 64 peut être réalisé au moyen d'un système de cames. Les tiges 64 peuvent présenter une forme comprenant des chanfreins afin de faciliter le guidage.

Par exemple, l'étape de guidage 103 comporte une première phase d'insertion 108 dans laquelle les tiges 64 du dispositif de guidage 62 sont insérées entre les segments conducteurs 19 pour arriver à leur position d'insertion respective. Cette position d'insertion est de préférence à proximité des lamelles de guidage pour faciliter l'insertion radiale desdites tiges entre les conducteurs. L'étape de guidage 103 comporte une deuxième phase de lissage 109 à la fin de laquelle les tiges 64 sont positionnées dans leur position de guidage desdits segment conducteurs 19. La phase de lissage 109 peut comprendre des mouvements de translation axiale des tiges 64 et/ou du corps de broche 41 afin de passer de la position d'insertion à la position de guidage. Dans la position de guidage, les tiges 64 sont agencées à proximité des extrémités 19F des segments conducteurs afin d'avoir un guidage plus précis desdits segments. La phase de lissage 109 peut également comporter un mouvement circonférentiel des tiges 64 et/ou du corps de broche 41 pour mieux positionner les segments conducteurs 19 en vis-à-vis des encoches 22.

Le procédé d'insertion 100 présente une quatrième étape de transfert 104 dans laquelle les segments conducteurs 19 sont insérés dans les encoches 22 jusqu'à une position axiale finale de chaque segment conducteur dans le corps de pièce bobinée 21. Cette position finale est notamment atteinte lorsqu'une partie de chaque jonction coudée 18C est en butée axiale contre le corps de pièce bobinée 21 ou l'isolant 23 recouvrant ledit corps 21.

L'étape de transfert 104 comprend une phase de transfert 114 qui est réalisée par un mouvement dans une direction axiale des épingles conductrices 18 et/ou du corps 21. De préférence ce mouvement est uniquement un mouvement axial. L'agencement des épingles conductrices 18, les unes par rapport aux autres, dans le corps de broche 41 correspond à l'agencement desdites épingles 18 dans le corps de pièce bobinée 21. L'agencement desdites épingles, les unes par rapport aux autres, n'est pas modifié lors de l'étape de transfert. Autrement dit, la disposition des segments conducteurs 19 dans les espaces latéraux 43 correspond à la disposition desdits segments 19 dans les encoches 22 du corps de pièce bobinée 21. Ainsi, l'étape de transfert correspond à une translation dans une direction axiale des épingles depuis le corps de broche 41 vers le corps de pièce bobinée 21. De préférence, les tiges 64 du dispositif de guidage 62 restent dans leur position de guidage lors de l'étape de transfert 104.

Alternativement, la phase de transfert peut comporter un mouvement dans une direction circonférentielle en plus du mouvement dans une direction axiale. Cela peut permettre d'insérer des épingles dont les segments conducteurs ne sont pas rectilignes, c'est-à-dire s'étendent dans une direction inclinée circonférentiellement par rapport à l'axe Z.

Comme visible sur l'exemple de la figure 10, le corps de pièce bobinée 21 et le corps de broche 41 présentent des formes complémentaires l'une de l'autre de sorte à ce que, lors de l'étape de transfert 104, le corps de broche soit inséré dans l'espace central défini par le corps de pièce bobinée. Le diamètre extérieur du corps de broche 41 est ici inférieur au diamètre intérieur du corps de pièce bobinée 21.

L'étape de transfert 104 comprend également une phase de déplacement 113 dans laquelle les lamelles de guidage 42 sont retirées au fur et à mesure du mouvement de translation axiale de sorte à permettre l'insertion du corps de broche 41 dans le corps de pièce bobinée 21. Chaque lamelle 42 est ainsi mobile entre une position d'engagement dans laquelle une portion de la lamelle s'étend entre deux segments conducteurs 19 et une position de dégagement dans laquelle ladite portion de la lamelle ne s'étend pas entre lesdits segments conducteurs. Par exemple, chaque lamelle de guidage 42 peut présenter différentes positions radiales par rapport audit corps 41. Par exemple, chaque lamelle de guidage est agencée dans la position d'engagement de sorte à s'étendre circonférentiellement entre au moins deux segments conducteurs 19 et est agencée dans la position de dégagement de sorte à être logée dans une rainure formée dans le corps de broche 41 de sorte à laisser libre l'espace circonférentiel entre lesdits deux segments conducteurs. Alternativement, les lamelles peuvent présenter un mouvement de translation axiale entre la position d'engagement et la position de dégagement. Toujours alternativement, les lamelles peuvent être montés de manière amovible de sorte à être complètement détachées du corps de broche 41 dans la position de dégagement.

Le corps de broche 41 peut comprendre une protubérance s'insérant au moins partiellement dans une encoche 22 de sorte à aligner circonférentiellement le corps de pièce bobinée 21 par rapport au corps de broche. Cela permet d'orienter l'insertion des épingles 18 dans ledit corps 21 pour ainsi créer un indexage. La protubérance peut s'étendre radialement de sorte à être insérée dans l'ouverture interne d'une encoche 22, c'est-à-dire entre deux pieds de dent.

Le dispositif de transfert 40 peut comporter un support de maintien radial 45 visible sur les figures 5 et 10. Le support de maintien radial 45 est agencé pour maintenir, dans une direction radiale interne, les segments conducteurs 19 des épingles conductrices 18 dans les espaces latéraux 43. Le support de maintien est positionné autour de la circonférence extérieure du corps de broche 41 muni desdites épingles 18. De préférence, le support de maintien 45 peut entourer totalement ledit corps 41. Le support de maintien 45 peut présenter plusieurs portions agencées de manière adjacente pour entourer ledit corps 41. Cela permet de simplifier le positionnement dudit support.

Le support de maintien radial 45 peut présenter une surface interne 45a s'étendant autour d'au moins une portion des segments conducteurs 19 de manière à bloquer leur mouvement radial vers l'extérieur par rapport à l'axe Z. La surface interne 45a peut former une surface lisse. Le support de maintien radial 45 présente une rainure 45b agencée pour loger au moins partiellement les jonctions coudées 18C. Cela permet d'approcher la surface interne 45a au plus près des segments conducteurs.

Le support de maintien radial 45 est notamment positionné autour du corps de broche 41 muni des épingles conductrices 18 lors de l'étape de préparation 101. L'étape de transfert 104 comporte une phase de retrait 105 du support de maintien radial 45. La phase de retrait 105 peut présenter une première phase dans laquelle le support de maintien radial 45 est décalé axialement dans une direction opposée à la direction de transfert des épingles conductrice 18 puis une seconde phase de retrait dans laquelle ledit support 45 est éloigné des épingles conductrices 18 de sorte à ne plus permettre leur maintien.

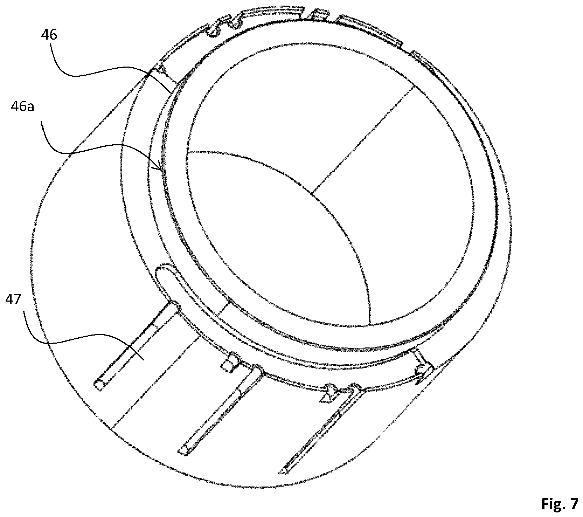

Le dispositif de transfert 40 peut comporter un support de maintien axial 46. Le support de maintien axial 46 est agencé pour maintenir, dans une direction axiale, les épingles conductrices 18 pour éviter un mouvement axial desdites épingles par rapport au corps de broche 41. Dans l'exemple de réalisation visible sur la figure 7, le support de maintien axial 46 présente une forme cylindrique dont une extrémité axiale est agencée pour venir en butée sur un sommet des jonctions coudées 18C. Par exemple, l'extrémité axiale comporte une rainure 46a permettant de loger lesdites jonctions coudées 18C, au moins partiellement, tout en formant la butée axiale. Le rainure 46a peut présenter différentes profondeurs afin de s'adapter aux différentes hauteurs axiales des épingles et notamment des jonctions coudées des épingles standards 30, 31 et des épingles de connexion 32.

Le support de maintien axial 46 est notamment positionné au-dessus du corps de broche 41 muni des épingles conductrices 18 lors de l'étape de préparation 101. L'étape de transfert 104 comporte une phase de maintien 106, par le support de maintien axial 46, dans une direction axiale des épingles conductrices pour éviter un mouvement axial desdites épingles par rapport au corps de broche 41. La phase de maintien 106 est notamment réalisée tout le long de l'étape de transfert 104.

Le dispositif de transfert 40 peut comporter un dispositif de poussée, non représenté sur les figures. Le dispositif de poussée est agencé pour pousser, dans une direction radiale externe les segments conducteurs 19 des épingles conductrices 18 logées dans les espaces latéraux 43. Le dispositif de poussée peut présenter une surface externe s'étendant à l'intérieur d'un diamètre formé par les segments conducteurs 19 de manière à exercer une force de pression sur lesdits segments dans une direction radiale externe. Cela permet d'éviter que lesdits segments ne rentrent en contact avec le corps de pièce bobinée 21 et notamment les pieds de dent dudit corps lors de la phase de transfert 114.

Le dispositif de transfert 40 peut comporter un dispositif d'immobilisation 47 permettant de maintenir au moins une épingle d'alimentation 33, 34 et/ou au moins une épingle de connexion 32 dans le corps de broche 41. Le dispositif d'immobilisation 47 permet notamment de maintenir lesdites épingles dans les directions radiale et axiale. Le dispositif d'immobilisation 47 permet, ici, de réaliser une phase de blocage 107 d'au moins une épingle d'alimentation 33, 34 lors des étapes de transfert 104 et d'insertion 103.

Dans cet exemple de réalisation, le dispositif d'immobilisation 47 est formé d'une rainure dans laquelle est insérée une épingle d'alimentation 33, 34. L'épingle de connexion 32 est, ici, maintenue de la même manière que les épingles standards 30, 31 via les lamelles de guidage 42. Alternativement, le dispositif d'immobilisation 47 peut être formé par des murets entourant l'épingle à maintenir ou un système d'encliquetage.

Dans l'exemple de réalisation illustré sur la figure 7, le dispositif de maintien axial 46 et le dispositif d'immobilisation 47 sont formés dans le même outillage. Alternativement, le dispositif de maintien axial 46 et le dispositif d'immobilisation 47 pourraient être formés dans deux outillages séparés.

Les figures 8 et 9 illustrent plus en détail un exemple de base 60. Dans cet exemple, la base comporte le dispositif de guidage 62. Ainsi, le corps de pièce bobinée 21 est maintenu axialement par le dispositif de guidage 62. L'étape de guidage 103 est ainsi principalement réalisée par des mouvements du corps de broche 41. Alternativement, la base 60 est le dispositif de guidage 62 peuvent être des outillages distincts. Dans cette alternative, la base 60 peut comporter un support permettant de maintenir le corps de pièce bobinée 21. Ledit support peut présenter une forme cylindrique complémentaire de la forme dudit corps 21.

Lors de l'étape de transfert 104, le dispositif de guidage 62 est monté sur le corps de pièce bobiné 21 et notamment sur une des faces d'extrémité axiale 29a, 29b dudit corps 21. Par exemple, chacune des tiges 64 est montée sur une surface d'extrémité axiale d'une dent 28 du corps de pièce bobinée 21. Le dispositif de guidage 62 peut être monté en contact avec ledit corps 21 ou de manière légèrement décalé dans une direction axiale.

Dans cet exemple, la base 60 comporte un dispositif de blocage 61 agencé pour maintenir dans une direction radiale vers l'extérieur les épingles conductrices 18 dans les encoches 22 du corps de pièce bobinée 21. Le dispositif de blocage 61 est notamment décalé axialement par rapport au corps de pièce bobinée 21 de sorte à être agencé entre le corps de pièce bobinée 21 et le corps de broche 41 avant la phase de transfert 114. Le dispositif de blocage 61 est notamment agencé le long d'une circonférence extérieure formée par l'ensemble d'épingle conductrices 18. Le dispositif de blocage 61 permet de remplacer le support de maintien radial 45 pour continuer le maintien dans une direction radiale desdites épingles 18 au plus près du corps de pièce bobinée 21 lors de la phase de transfert 114. Le dispositif de guidage 62 est ici agencé axialement entre le dispositif de blocage 61 et le corps de pièce bobinée 21.

Dans cet exemple, le dispositif de blocage 61 présente plusieurs portions de blocage 61a agencées de manière adjacente pour entourer l'ensemble des épingles conductrices 18. Par exemple, chaque portion de blocage 61a peut présenter une première position de blocage dans laquelle les épingles conductrices 18 sont maintenues et une deuxième position de repos dans laquelle ladite portion de blocage s'étend à distance desdites épingles. La portions de blocage 61a peut présenter un mouvement de translation dans une direction radiale entre la position de blocage et la position de repos. Comme visible sur la figure 9, les portions de blocage 61a peuvent présenter des formes complémentaires les unes des autres afin de permettre leur imbrication circonférentielle dans leur position de blocage. Comme visible sur la figure 8, le mouvement de translation radial du dispositif de blocage 61 peut être réalisé au moyen d'un système de cames 63.

La base 60 peut comporter deux dispositifs de guidage 62, chacun d'eux étant positionné de part et d'autre axialement du corps de pièce bobinée 21. De manière similaire, la base 60 peut comporter deux dispositifs de blocage 61, chacun d'eux étant positionné de part et d'autre axialement du corps de pièce bobinée 21. Cela permet de guider et maintenir les extrémités libres 19F des segments conducteurs qui traversent le corps de pièce bobinée lors de l'étape de transfert 104.

Une fois l'étape de transfert 104 terminée, le procédé peut comporter une étape de vrillage des extrémités libres 19F des épingles conductrices afin de leur donner leur position finale en vue de réaliser les connexions électriques entre lesdites épingles pour former le bobinage électrique 24.

La présente invention trouve des applications en particulier dans le domaine des alternateurs, des alterno-démarreurs, des moteurs électriques ou encore des machines réversibles mais elle pourrait également s'appliquer à tout type de machine tournante. Bien entendu, la description qui précède a été donnée à titre d'exemple uniquement et ne limite pas le domaine de la présente invention dont on ne sortirait pas en remplaçant les différents éléments par tous autres équivalents. Par exemple, on ne sortira pas du cadre de l'invention en adaptant le procédé d'insertion et l'ensemble de transfert décrit ci-dessus pour une machine électrique tournante dont le stator est positionné radialement à l'intérieur du rotor.

## Revendications

1. Procédé d'insertion d'épingles conductrices depuis un dispositif de transfert vers un corps de pièce bobinée, chaque épingle conductrice (18) étant formée d'au moins un segment conducteur (19) et étant destinée à être connectée électriquement à au moins une autre épingle conductrice par l'intermédiaire de leur extrémité libre pour former un bobinage électrique (24) d'une pièce bobinée d'une machine électrique tournante (10) s'étendant autour d'un premier axe (X), le dispositif de transfert (40) comprenant un corps de broche (41) s'étendant autour d'un second axe (Z) et une pluralité de lamelles de guidage (42) s'étendant radialement à partir du corps de broche, des espaces latéraux (43) destinés à loger au moins un segment conducteur (19) étant définis entre deux lamelles de guidage adjacentes, la pièce bobinée comprenant un corps de pièce bobiné (21) de forme cylindrique et une pluralité de dents (28) s'étendant à partir dudit corps de pièce bobiné de sorte à définir, entre deux dents adjacentes, des encoches (22) destinées à loger au moins un segment conducteur (19), le procédé d'insertion (100) comprenant
- une étape de préparation (101) dans laquelle les épingles conductrices (18) sont agencées au moins partiellement dans les espaces latéraux (43) du corps de broche (41) du dispositif de transfert (40) ;
- une étape de positionnement (102) du corps de broche (41) du dispositif de transfert par rapport au corps de pièce bobiné (21) axialement l'un au-dessus de l'autre ;
- une étape de guidage (103) dans laquelle un dispositif de guidage (62) est agencé pour guider, dans une direction circonférentielle et/ou radiale, les segments conducteurs (19) desdites épingles conductrices (18) ; l'étape de guidage (103) comportant une phase d'insertion (108) d'au moins une portion du dispositif de guidage (62) entre des segments conducteurs (19) dans une position d'insertion et une phase de lissage (109) dans laquelle le dispositif de guidage et/ou le dispositif de transfert (40) est déplacé axialement entre la position d'insertion et une position de guidage dans laquelle ladite portion du dispositif de guidage (62) est agencée de manière plus proche des extrémités (19F) desdits segments conducteurs (19) par rapport à la position d'insertion et
- une étape de transfert (104) comprenant une phase de transfert (114) dans laquelle les segments conducteurs (19) sont insérés, dans une direction axiale, dans les encoches (22) correspondantes, et une phase de déplacement (113) d'au moins une lamelle de guidage (42) entre une position d'engagement dans laquelle au moins une portion de ladite lamelle s'étend entre deux segments conducteurs (19) et une position de dégagement dans laquelle ladite au moins une portion de la lamelle s'étend à distance desdits deux segments conducteurs (19).

2. Procédé d'insertion selon la revendication précédente, dans lequel, lors de l'étape de préparation (101), les épingles conductrices (18) sont agencées de manière séquentielle dans les espaces latéraux (43).

3. Procédé d'insertion selon l'une des revendications précédentes, dans lequel, lors de l'étape de positionnement (102), le corps de broche (41) et le corps de pièce bobinée sont agencées de sorte que chaque espace latéral (43) soit au moins partiellement aligné axialement avec une encoche (22) correspondante du corps de pièce bobinée.

4. Procédé d'insertion selon l'une des revendications précédentes, dans lequel le dispositif de guidage (62) comporte des tiges (64) insérées radialement entre les segments conducteurs (19), l'étape de guidage (103) étant réalisée par déplacement desdites tiges et/ou du corps de broche (41) dans une direction circonférentielle et/ou radiale.

5. Procédé d'insertion selon l'une des revendications précédentes, dans lequel le corps de pièce bobinée (21) présente une forme annulaire s'étendant autour du premier axe (X) et le corps de broche (41) présente une forme cylindrique s'étendant autour du second axe (Z) complémentaire de ladite forme annulaire de sorte à ce que, lors de l'étape de transfert (104), le corps de broche (41) soit inséré dans le corps de pièce bobinée (21).

6. Procédé d'insertion selon l'une des revendications précédentes, dans lequel le corps de broche (41) comprend, en outre, au moins une protubérance s'insérant au moins partiellement dans une encoche (22) de sorte à aligner circonférentiellement le corps de pièce bobinée (21) par rapport au corps de broche.

7. Procédé d'insertion selon l'une des revendications précédentes, dans lequel l'étape de transfert (104) comporte, en outre, une phase de retrait (105) d'un support de maintien radial (45) agencé pour maintenir dans une direction radiale les segments conducteurs (19) des épingles conductrices (18) dans les espaces latéraux (43) du corps de broche (41).

8. Procédé d'insertion selon l'une des revendications précédentes, dans lequel l'étape de transfert (104) comporte, en outre, une phase de maintien (106), par un support de maintien axial (46), dans une direction axiale des épingles conductrices (18) pour éviter un mouvement axial desdites épingles par rapport au corps de broche (41).

9. Procédé d'insertion selon l'une des revendications précédentes, dans lequel l'étape de transfert (104) comporte, en outre, une phase de blocage (107), par un dispositif de blocage (61), dans une direction radiale des épingles conductrices (19) pour éviter un mouvement radial desdites épingles par rapport au corps de pièce bobinée (21).

10. Procédé d'insertion selon l'une des revendications précédentes, dans lequel les lamelles de guidage (42) sont rétractables de sorte à pouvoir être logées, respectivement, dans des rainures correspondantes réalisées dans le corps de broche (41), lors de la phase de déplacement.

11. Procédé d'insertion selon l'une des revendications précédentes, dans lequel, lors de l'étape de transfert (104), le corps de broche (41) et/ou le corps de pièce bobinée (21) présentent un mouvement circonférentiel accompagnant la phase de transfert.

12. Ensemble de transfert d'épingles conductrices, chaque épingle conductrice (18) étant formée d'au moins un segment conducteur (19) et étant destinée à être connectée électriquement à au moins une autre épingle conductrice par l'intermédiaire de leur extrémité libre pour former un bobinage électrique (24) d'une pièce bobinée d'une machine électrique tournante (10) s'étendant autour d'un premier axe (X), l'ensemble de transfert étant agencé pour participer à la mise en œuvre du procédé d'insertion (100) selon l'une quelconque des revendications précédente, l'ensemble de transfert comprenant
- un dispositif de transfert (40) comprenant un corps de broche (41) s'étendant autour d'un second axe (Z) et une pluralité de lamelles de guidage (42) s'étendant radialement à partir du corps de broche, des espaces latéraux (43) destinés à loger au moins un segment conducteur (19) étant définis entre deux lamelles de guidage adjacentes, au moins une lamelle de guidage (42) étant mobile entre une position d'engagement dans laquelle au moins une portion de ladite lamelle s'étend entre deux segments conducteurs (19) et une position de dégagement dans laquelle ladite au moins une portion de la lamelle s'étend à distance desdits deux segments conducteurs (19),
- une base (60) agencée pour maintenir le corps de pièce bobinée (21),
- un dispositif de guidage (62) agencé pour guider, dans une direction circonférentielle et/ou radiale, les segments conducteurs (19) desdites épingles conductrices (18).

13. Ensemble de transfert selon la revendication précédente, dans lequel le dispositif de guidage (62) présente des tiges (64) s'étendant circonférentiellement entre deux segments conducteurs (19).

14. Ensemble de transfert selon la revendication 12 ou 13, dans lequel l'ensemble comporte un dispositif d'immobilisation (47) d'au moins une épingle conductrice d'alimentation (33, 34) ou de connexion (32) dans le corps de broche (41), ladite épingle conductrice d'alimentation ou de connexion présentant une hauteur, dans une direction axiale, différente d'une hauteur, dans une direction axiale, d'une épingle conductrice standard (30, 31).

## Patentansprüche

1. Verfahren zum Einsetzen von leitfähigen Stiften von einer Übertragungsvorrichtung zu einem Körper eines gewickelten Teils, wobei jeder leitfähige Stift (18) von mindestens einem leitfähigen Segment (19) gebildet wird und dazu bestimmt ist, elektrisch mit mindestens einem anderen leitfähigen Stift über ihr freies Ende verbunden zu werden, um eine elektrische Wicklung (24) eines gewickelten Teils einer rotierenden elektrischen Maschine (10) zu bilden, das sich um eine erste Achse (X) erstreckt, wobei die Übertragungsvorrichtung (40) einen Spindelkörper (41), der sich um eine zweite Achse (Z) erstreckt, und mehrere Führungslamellen (42), die sich von dem Spindelkörper aus radial erstrecken, umfasst, wobei seitliche Zwischenräume (43), die dazu bestimmt sind, mindestens ein leitfähiges Segment (19) aufzunehmen, zwischen zwei benachbarten Führungslamellen definiert sind, wobei das gewickelte Teil einen Körper des gewickelten Teils (21) von zylindrischer Form und mehrere Zähne (28), die sich von dem Körper des gewickelten Teils aus erstrecken, umfasst, um zwischen zwei benachbarten Zähnen Einschnitte (22) zu definieren, die dazu bestimmt sind, mindestens ein leitfähiges Segment (19) aufzunehmen, wobei das Verfahren zum Einsetzen (100) umfasst:
- einen Schritt der Vorbereitung (101), in dem die leitfähigen Stifte (18) mindestens parallel in den seitlichen Zwischenräumen (43) des Spindelkörpers (41) der Übertragungsvorrichtung (40) angeordnet werden;
- einen Schritt der Positionierung (102) des Spindelkörpers (41) der Übertragungsvorrichtung bezüglich des Körpers des gewickelten Teils (21) axial übereinander;
- einen Schritt der Führung (103), in dem eine Führungsvorrichtung (62) dazu eingerichtet ist, die leitfähigen Segmente (19) der leitfähigen Stifte (18) in einer Umfangsrichtung und/oder radialen Richtung zu führen; wobei der Schritt der Führung (103) eine Phase des Einsetzens (108) mindestens eines Abschnitts der Führungsvorrichtung (62) zwischen leitfähige Segmente (19) in einer Einsetzposition umfasst, und eine Phase des Glättens (109), in der die Führungsvorrichtung und/oder die Übertragungsvorrichtung (40) axial verlagert wird zwischen der Einsetzposition und einer Führungsposition, in welcher der Abschnitt der Führungsvorrichtung (62) näher an den Enden (19F) der leitfähigen Segmente (19) angeordnet ist als in der Einsetzposition, und
- einen Schritt der Übertragung (104), der eine Phase der Übertragung (114) umfasst, in der die leitfähigen Segmente (19) in einer axialen Richtung in die entsprechenden Einschnitte (22) eingesetzt werden, und eine Phase der Verlagerung (113) mindestens einer Führungslamelle (42) zwischen einer Eingriffsposition, in der mindestens ein Abschnitt der Lamelle sich zwischen zwei leitfähigen Segmenten (19) erstreckt, und einer Freigabeposition, in welcher der mindestens eine Abschnitt der Lamelle sich in einem Abstand von den zwei leitfähigen Segmenten (19) erstreckt.

2. Verfahren zum Einsetzen nach dem vorhergehenden Anspruch, wobei im Schritt der Vorbereitung (101) die leitfähigen Stifte (18) nacheinander in den seitlichen Zwischenräumen (43) angeordnet werden.

3. Verfahren zum Einsetzen nach einem der vorhergehenden Ansprüche, wobei im Schritt der Positionierung (102) der Spindelkörper (41) und der Körper des gewickelten Teils so angeordnet werden, dass jeder seitliche Zwischenraum (43) wenigstens teilweise mit einem entsprechenden Einschnitt (22) des Körpers des gewickelten Teils axial ausgerichtet ist.

4. Verfahren zum Einsetzen nach einem der vorhergehenden Ansprüche, wobei die Führungsvorrichtung (62) Stäbe (64) aufweist, die radial zwischen die leitfähigen Segmente (19) eingesetzt sind, wobei der Schritt der Führung (103) durch Verlagerung der Stäbe und/oder des Spindelkörpers (41) in einer Umfangsrichtung und/oder radialen Richtung ausgeführt wird.

5. Verfahren zum Einsetzen nach einem der vorhergehenden Ansprüche, wobei der Körper des gewickelten Teils (21) eine Ringform aufweist, die sich um die erste Achse (X) erstreckt, und der Spindelkörper (41) eine sich um die zweite Achse (Z) erstreckende zylindrische Form aufweist, die komplementär zu der Ringform ist, so dass im Schritt der Übertragung (104) der Spindelkörper (41) in den Körper des gewickelten Teils (21) eingesetzt wird.

6. Verfahren zum Einsetzen nach einem der vorhergehenden Ansprüche, wobei der Spindelkörper (41) außerdem mindestens einen Vorsprung umfasst, der sich wenigstens teilweise in einen Einschnitt (22) einfügt, um den Körper des gewickelten Teils (21) bezüglich des Spindelkörpers in Umfangsrichtung auszurichten.

7. Verfahren zum Einsetzen nach einem der vorhergehenden Ansprüche, wobei der Schritt der Übertragung (104) außerdem eine Phase des Rückzugs (105) einer radialen Halterung (45) aufweist, die dazu eingerichtet ist, die leitfähigen Segmente (19) der leitfähigen Stifte (18) in den seitlichen Zwischenräumen (43) des Spindelkörpers (41) in einer radialen Richtung zu halten.

8. Verfahren zum Einsetzen nach einem der vorhergehenden Ansprüche, wobei der Schritt der Übertragung (104) außerdem eine Phase des Haltens (106) der leitfähigen Stifte (18) durch eine axiale Halterung (46) in einer axialen Richtung aufweist, um eine axiale Bewegung der Stifte bezüglich des Spindelkörpers (41) zu vermeiden.

9. Verfahren zum Einsetzen nach einem der vorhergehenden Ansprüche, wobei der Schritt der Übertragung (104) außerdem eine Phase des Blockierens (107) der leitfähigen Stifte (19) durch eine Blockiervorrichtung (61) in einer radialen Richtung aufweist, um eine radiale Bewegung der Stifte bezüglich des Körpers des gewickelten Teils (21) zu vermeiden.

10. Verfahren zum Einsetzen nach einem der vorhergehenden Ansprüche, wobei die Führungslamellen (42) zurückziehbar sind, so dass sie in der Phase der Verlagerug jeweils in entsprechenden Nuten aufgenommen werden können, die im Spindelkörper (41) ausgebildet sind.

11. Verfahren zum Einsetzen nach einem der vorhergehenden Ansprüche, wobei im Schritt der Übertragung (104) der Spindelkörper (41) und/oder der Körper des gewickelten Teils (21) eine Bewegung in Umfangsrichtung aufweisen, welche die Phase der Übertragung begleitet.

12. Anordnung zur Übertragung von leitfähigen Stiften, wobei jeder leitfähige Stift (18) von mindestens einem leitfähigen Segment (19) gebildet wird und dazu bestimmt ist, elektrisch mit mindestens einem anderen leitfähigen Stift über ihr freies Ende verbunden zu werden, um eine elektrische Wicklung (24) eines gewickelten Teils einer rotierenden elektrischen Maschine (10) zu bilden, das sich um eine erste Achse (X) erstreckt, wobei die Anordnung zur Übertragung dazu eingerichtet ist, an der Durchführung des Verfahrens zum Einsetzen (100) nach einem der vorhergehenden Ansprüche teilzunehmen, wobei die Anordnung zur Übertragung umfasst:
- eine Übertragungsvorrichtung (40), die einen Spindelkörper (41), der sich um eine zweite Achse (Z) erstreckt, und mehrere Führungslamellen (42), die sich von dem Spindelkörper aus radial erstrecken, umfasst, wobei seitliche Zwischenräume (43), die dazu bestimmt sind, mindestens ein leitfähiges Segment (19) aufzunehmen, zwischen zwei benachbarten Führungslamellen definiert sind, wobei mindestens eine Führungslamelle (42) beweglich ist zwischen einer Eingriffsposition, in der mindestens ein Abschnitt der Lamelle sich zwischen zwei leitfähigen Segmenten (19) erstreckt, und einer Freigabeposition, in welcher der mindestens eine Abschnitt der Lamelle sich in einem Abstand von den zwei leitfähigen Segmenten (19) erstreckt,
- ein Unterteil (60), das dazu eingerichtet ist, den Körper des gewickelten Teils (21) zu halten,
- eine Führungsvorrichtung (62), die dazu eingerichtet ist, die leitfähigen Segmente (19) der leitfähigen Stifte (18) in einer Umfangsrichtung und/oder radialen Richtung zu führen.

13. Anordnung zur Übertragung nach dem vorhergehenden Anspruch, wobei die Führungsvorrichtung (62) Stäbe (64) aufweist, die sich in Umfangsrichtung zwischen zwei leitfähigen Segmenten (19) erstrecken.

14. Anordnung zur Übertragung nach Anspruch 12 oder 13, wobei die Anordnung mindestens eine Vorrichtung zur Fixierung (47) mindestens eines leitfähigen Stromversorgungsstiftes (33, 34) oder Verbindungsstiftes (32) im Spindelkörper (41) aufweist, wobei der leitfähige Stromversorgungs- oder Verbindungsstift eine Höhe in einer axialen Richtung aufweist, die von einer Höhe eines standardmäßigen leitfähigen Stiftes (30, 31) in einer axialen Richtung verschieden ist.

## Claims

1. Method for inserting conductive pins from a transfer device to a body of a wound part, each conductive pin (18) being formed of at least one conductive segment (19) and being intended to be electrically connected to at least one other conductive pin via their free end in order to form an electrical winding (24) of a wound part of a rotary electric machine (10) extending around a first axis (X), the transfer device (40) comprising a spindle body (41) extending around a second axis (Z) and a plurality of guide strips (42) radially extending from the spindle body, lateral spaces (43) intended to house at least one conductive segment (19) being defined between two adjacent guide strips, the wound part comprising a cylindrical body (21) of the wound part and a plurality of teeth (28) extending from said body of the wound part so as to define slots (22) between two adjacent teeth, which slots are intended to house at least one conductive segment (19), the insertion method (100) comprising:
- a preparation step (101), in which the conductive pins (18) are at least partially arranged in the lateral spaces (43) of the spindle body (41) of the transfer device (40);
- a step (102) of positioning the spindle body (41) of the transfer device relative to the body (21) of the wound part so that they are axially positioned one above the other;
- a guide step (103), in which a guide device (62) is arranged to guide the conductive segments (19) of said conductive pins (18) in a circumferential and/or radial direction; the guide step (103) comprising a phase (108) of inserting at least one portion of the guide device (62) between conductive segments (19) in an insertion position, and a smoothing phase (109), in which the guide device and/or the transfer device (40) is/are axially moved between the insertion position and a guide position, in which said portion of the guide device (62) is arranged closer to the ends (19F) of said conductive segments (19) relative to the insertion position, and
- a transfer step (104) comprising a transfer phase (114), in which the conductive segments (19) are inserted into the corresponding slots (22) in an axial direction, and a phase (113) of moving at least one guide strip (42) between an engagement position, in which at least one portion of said strip extends between two conductive segments (19), and a disengagement position, in which said at least one portion of the strip extends at a distance from said two conductive segments (19).

2. Insertion method according to the preceding claim, wherein, during the preparation step (101), the conductive pins (18) are sequentially arranged in the lateral spaces (43).

3. Insertion method according to either of the preceding claims, wherein, during the positioning step (102), the spindle body (41) and the body of the wound part are arranged such that each lateral space (43) is at least partially axially aligned with a corresponding slot (22) of the body of the wound part.

4. Insertion method according to one of the preceding claims, wherein the guide device (62) comprises rods (64) radially inserted between the conductive segments (19), the guide step (103) being carried out by moving said rods and/or the spindle body (41) in a circumferential and/or radial direction.

5. Insertion method according to one of the preceding claims, wherein the body (21) of the wound part has an annular shape extending around the first axis (X) and the spindle body (41) has a cylindrical shape extending around the second axis (Z) matching said annular shape such that, during the transfer step (104), the spindle body (41) is inserted into the body (21) of the wound part.

6. Insertion method according to one of the preceding claims, wherein the spindle body (41) further comprises at least one protuberance that at least partially inserts into a slot (22) so as to circumferentially align the body (21) of the wound part relative to the spindle body.

7. Insertion method according to one of the preceding claims, wherein the transfer step (104) further comprises a phase (105) of removing a radial retention support (45) that is arranged to retain the conductive segments (19) of the conductive pins (18) in the lateral spaces (43) of the spindle body (41) in a radial direction.

8. Insertion method according to one of the preceding claims, wherein the transfer step (104) further comprises a phase (106) of retaining the conductive pins (18) in an axial direction, using an axial retention support (46), so as to prevent an axial movement of said pins relative to the spindle body (41).

9. Insertion method according to one of the preceding claims, wherein the transfer step (104) further comprises a phase (107) of blocking the conductive pins (19) in a radial direction, using a blocking device (61), so as to prevent a radial movement of said pins relative to the body (21) of the wound part.

10. Insertion method according to one of the preceding claims, wherein the guide strips (42) are retractable so as to be able to be respectively housed in corresponding grooves produced in the spindle body (41), during the moving phase.

11. Insertion method according to one of the preceding claims, wherein, during the transfer step (104), the spindle body (41) and/or the body (21) of the wound part experience a circumferential movement accompanying the transfer phase.

12. Assembly for transferring conductive pins, each conductive pin (18) being formed of at least one conductive segment (19) and being intended to be electrically connected to at least one other conductive pin via their free end in order to form an electrical winding (24) of a wound part of a rotary electric machine (10) extending around a first axis (X), the transfer assembly being designed to assist the implementation of the insertion method (100) according to any one of the preceding claims, the transfer assembly comprising:
- a transfer device (40) comprising a spindle body (41) extending around a second axis (Z) and a plurality of guide strips (42) radially extending from the spindle body, lateral spaces (43) intended to house at least one conductive segment (19) being defined between two adjacent guide strips, at least one guide strip (42) being movable between an engagement position, in which at least one portion of said strip extends between two conductive segments (19), and a disengagement position, in which said at least one portion of the strip extends at a distance from said two conductive segments (19);
- a base (60) arranged to retain the body (21) of the wound part;
- a guide device (62) arranged to guide the conductive segments (19) of said conductive pins (18) in a circumferential and/or radial direction.

13. Transfer assembly according to the preceding claim, wherein the guide device (62) has rods (64) circumferentially extending between two conductive segments (19).

14. Transfer assembly according to Claim 12 or 13, wherein the assembly comprises a device (47) for immobilizing at least one power supply (33, 34) or connection (32) conductive pin in the spindle body (41), the height of said power supply or connection conductive pin in an axial direction being different from the height of a standard conductive pin (30, 31) in an axial direction.
